# EUROPEAN PATENT APPLICATION

(11) **EP 3 667 382 A1**
(43) Date of publication of application: **17.06.2020**
(21) Application number: 19215468.0
(22) Date of filing: 12.12.2019
(51) Int. Cl.: G02B 6/44, G02B 6/02

(54) **OPTICAL CABLE AND OPTICAL FIBER FOR INDOOR INSTALLATION**

(30) Priority: 13.12.2018 IT 201800011048
(71) Applicant: Prysmian S.p.A., 20126 Milano (IT)
(72) Inventor: GRIFFITHS, Ian James, 20126 MILANO (IT); PERA GOLZALVEZ, Gerard, 20126 MILAN (IT)
(74) Representative: Pietra, Giulia

(57) **Abstract**

Disclosed is an optical cable comprising an uncolored, non opaque outer sheath housing a number n of optical fibres having respective uncolored, non opaque coatings. At least n-1 optical fibres have uncolored, non opaque coatings bearing respective ultraviolet identification markings. When the optical cable is normally illuminated by natural light or artificial light, the visual impact of the cable at naked eye is minimum. When, a field operator has to identify the optical fibers within the cable, she/he illuminates the optical fibers of the cable with the UV light of a UV source. This way, the UV identification markings of the optical fibers become visible to the human eye and allow the field operator to identify the optical fiber(s) of interest. Hence, identifiability of each single optical fiber is advantageously achieved without increasing the visual impact of the cable.

## Description

### BACKGROUND

The present disclosure relates to the field of optical fibers and cables suitable for indoor installation. In particular, the present disclosure relates to an optical cable and an optical fiber for indoor installation.

### STATE OF THE ART

As known, an optical cable typically comprises an optical core including one or more optical fibers, and an outer jacket enclosing the optical core. The outer jacket is typically made of a polymeric material and has the function of grouping the optical fiber and protecting the optical core from the mechanical point of view.

Within the outer jacket, the optical fibers may be arranged in various ways. In particular, in the so-called "loose tube cables", the optical fibers are loosely arranged within the outer jacket. Optionally, the optical fibers may be grouped in one or more bundles, each bundle being enclosed by a respective buffer tube. Within each buffer tube, the individual fibers are free to move relative to one another.

Loose tube cables are typically used for applications where the optical fibers must be individually extracted from the cable and spliced, for example in FTTH (Fiber-To-The-Home) and FTTP (Fiber-To-The-Premise) applications. For instance, drop cables of FTTH or FTTP networks are typically implemented as loose tube cables with a particularly reduced diameter (less than 10 mm).

The optical cables for FTTH or FTTP networks are typically installed in indoor environments such as offices, apartments or houses. Different ways are known for installing optical cables in indoor environments. For example, the optical cables may be laid in ducts which run within the walls or which are attached to the wall surfaces. Alternatively, the optical cables may be directly attached to the wall surfaces, for example by means of glue. This latter arrangement, though easier to be deployed, makes the optical cables visible at naked-eye on the wall surface. In this situation, it is desirable that the optical cables have a reduced visual impact and match with the surrounding environment as much as possible, so as not to create unpleasant visual effects.

US 2018/0188461 discloses an optical cable invisibly formed so as to be substantially transparent. The optical cable comprises a plurality of optical fibers, each fiber comprising a core, a clad and optionally a coating layer made of a transparent resin (e.g. PVC, polyester elastomer, polyester, polyethylene or nylon, either alone or in combination). The cable also comprises a transparent sheath (made e.g. of PVC) surrounding the fibers. A transparent filler fills the space between the optical fibers and the sheath, for example yarns such as aramid fiber or glass fiber.

### SUMMARY

The Applicant has noticed that the optical cable of US 2018/0188461 exhibits some drawbacks.

In particular, in the cable of US 2018/0188461 the optical fibers are not individually identifiable by visual inspection. Identifiability of each single fiber contained in an optical cable is however essential to enable a field operator to properly manage the optical fibers of the cable. For example, the field operator shall be enabled to identify the optical fiber(s) that corresponds to a certain end user, so that she/he can extract it (them) from the optical cable and connect it as needed.

The standard TIA-598-C (2005) Optical Fiber Cable Color Coding defines an identification scheme for optical fibers or buffered fibers, based on twelve standards colours (blue, orange, green, brown, slate, white, red, black, yellow, violet, rose, aqua). For more than twelve fibers, the colour codes are repeated and striped with black (except black, which is striped with yellow). Every twelve fibers, one stripe is added.

However, if the optical fibers of the cable of US 2018/0188461 were colored according to the standard TIA-598-C Optical Fiber Cable Color Coding, the visual impact of the cable would be increased, with the risk that the cable creates unpleasant visual effects in the indoor environment where it is installed.

The Applicant has then faced the problem of providing an optical cable and an optical fiber for indoor installation which overcome the aforesaid drawbacks.

In particular, the Applicant has tackled the problem of providing an optical cable and an optical fiber for indoor installation wherein identifiability of each single optical fiber is achieved, without increasing the visual impact of the cable and the risk that the cable creates unpleasant visual effects in the indoor environment where it is installed.

In the present description and in the claims, the expression "non opaque" will designate a material allowing light in the visible spectrum to pass through, wherein "visible spectrum" designates a wavelength range from 390 nm to 700 nm. A non opaque material may be either a translucent material or a transparent material. In a translucent material, photons are scattered at either of the two surfaces of the translucent material (where there is a change of the refraction index) or within the thickness of the material. In a transparent material (e.g. a glass-like material), instead, light passes through without being scattered, photons being refracted according to the known Snell's law.

According to embodiments of the present disclosure, the above problem is solved by an optical cable comprising an uncolored, non opaque outer sheath, a number of optical fibers arranged within the uncolored, non opaque outer sheath, wherein a number of optical fibers comprises an uncolored, non opaque coating with at least one respective ultraviolet (UV) identification marking.

As known, UV markings are made of or printed in a fluorescent ink, which is transparent but can be seen under an ultraviolet light. The fluorescent ink typically contains a diluent and a photoinitiator suitable for absorbing the UV light emitted by a UV source. The UV source (typically, a UV LED) emits a ultraviolet light, in particular a near-ultraviolet light at a wavelength comprised between 300 nm and 390 nm, typically 380 nm. When the UV light hits the fluorescent ink, it makes it fluoresce, so that it emits light in the visible spectrum and makes the UV marking visible for human eyes. As known, indeed, fluorescence is caused by a conversion of energy. When a UV light - which is invisible to human eye - hits a fluorescent surface (e.g. the fluorescent ink), it is absorbed by the electrons of the fluorescent surface, which jump into higher energy orbital patterns. When the electrons fall back on their normal orbital pattern, they emit an amount of energy in the form of light in the visible spectrum.

Therefore, advantageously, when the optical cable is normally illuminated by natural light or artificial light provided by an artificial light source such as an incandescence lamp, a halogen lamp or a white LED, the visual impact of the cable at naked eye is minimum and the cable does not create unpleasant visual effects in the indoor environment where it is installed.

Besides, when a field operator has to identify one or more optical fibers within the cable (for example, the optical fiber(s) that corresponds to a certain end user), she/he illuminates the optical fibers of the cable with the UV light of a UV source. This way, the UV identification markings of the optical fibers become visible to the human eye and allow the field operator to identify the optical fiber(s) of interest. Hence, identifiability of each single optical fiber is advantageously achieved without increasing the visual impact of the cable.

Therefore, according to a first aspect, the present disclosure provides an optical cable comprising an uncolored, non opaque outer sheath housing a number n of optical fibres each having a respective uncolored, non opaque coating, wherein at least n-1 optical fibres have the uncolored, non opaque coating- bearing respective ultraviolet identification markings.

In an embodiment, the number n of optical fibres has the respective uncolored, non opaque coating bearing respective ultraviolet identification markings.

In an embodiment, the optical fibres are grouped in one or more bundles, each bundle being enclosed by a respective buffer tube wherein each buffer tube is made of an uncolored, non opaque polymeric material.

In an embodiment, the uncolored, non opaque outer sheath has an outer diameter lower than 10 mm.

In an embodiment, the uncolored, non opaque outer sheath has a thickness comprised between 0.1 mm and 0.5 mm.

According to a second aspect, the present disclosure provides an optical fibre comprising an uncolored, non opaque coating bearing an ultraviolet identification marking.

For the purpose of the present description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

The present disclosure, in at least one of the aforementioned aspects, can be implemented according to one or more of the following embodiments, optionally combined together.

For the purpose of the present description and of the appended claims, the words "a" or "an" should be read to include one or at least one and the singular also includes the plural unless it is obvious that it is meant otherwise. This is done merely for convenience and to give a general sense of the disclosure.

For the purpose of the present description and of the appended claims, as "coating" for an optical fibre it is meant a single layer or double layer coating.

### BRIEF DESCRIPTION OF THE FIGURES

The present disclosure will become fully clear after reading the following detailed description, given by way of example and not of limitation, with reference to the attached drawings wherein:
- Figure 1 schematically shows an optical cable for indoor installation according to an embodiment of the present invention;
- Figure 2 schematically shows an optical fiber according to an embodiment of the present invention; and
- Figure 3 shown a plurality of optical fibers with exemplary UV identification markings, according to an embodiment of the present invention.

### DETAILED DESCRIPTION

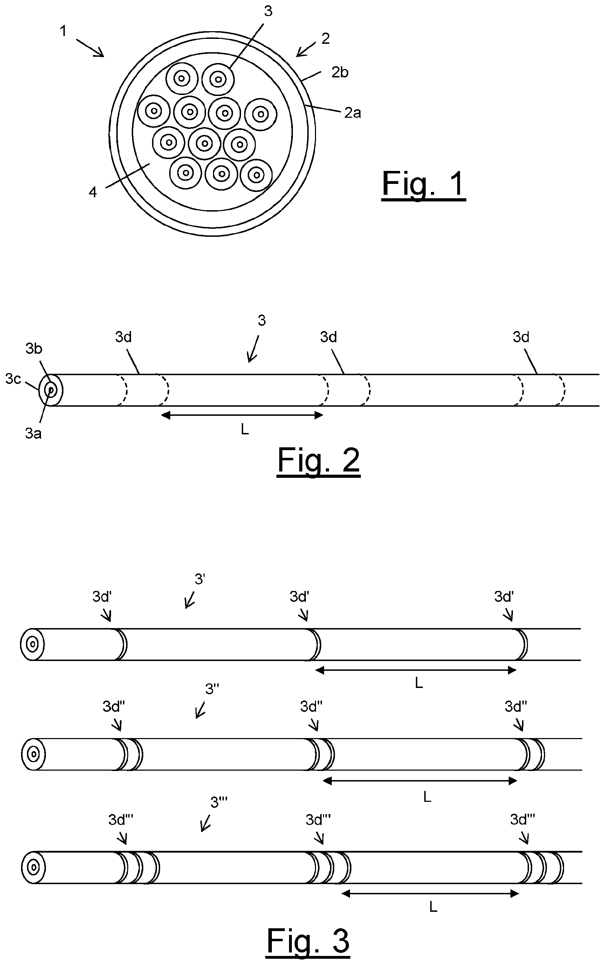

In Figure 1, an optical cable for indoor installation according to an embodiment of the present invention is indicated by reference number 1.

The optical cable 1 comprises an outer sheath 2 and a plurality of optical fibers 3.

The outer sheath 2 is made of an uncolored non opaque material, preferably an uncolored, non opaque polymeric material, allowing the optical fibers 3 enclosed therein to be seen at naked eye.

For example, the outer sheath 2 may comprise PC (polycarbonate), PA 12 (polyamide 12), HDPE (high density polyethylene) or PVC (polyvinyl chloride).

The outer diameter of the outer sheath 2 can be lower than 10 mm, for example between 1 mm and 10 mm or between 2 mm and 5 mm. In an embodiment, the outer diameter of the outer sheath 2 may be of 2.5 mm.

The thickness of the outer sheath 2 can be comprised between 0.1 mm and 0.5 mm, for example between 0.2 mm and 0.3 mm.

According to embodiments, the outer sheath 2 may comprise two or more layers made of different uncolored, non opaque materials, such that in the optical cable 1 shown in Figure 1 the outer sheath 2 comprises an innermost layer 2a and an outermost layer 2b. For example, the innermost layer 2a may be made of uncolored transparent PC (polycarbonate), while the outermost layer 2b may be a coating of uncolored transparent PA 12 (polyamide 12) having a thickness of 0.05 mm.

In a non illustrated embodiment, the optical cable of the present disclosure comprises a plurality of optical fibres in one or more bundles, each bundle being enclosed by a respective buffer tube wherein each buffer tube is made of an uncoloured, non opaque polymeric material, for example a material selected among those listed in connection with the outer sheath material. The bundles are contained in an outer sheath.

With reference now to Figure 2, each optical fibre 3 can be for communication applications and comprise a core 3a, a cladding 3b and a coating 3c.

The core 3a and the cladding 3b are made of uncolored, transparent materials, for example silica-based materials. The refractive index of the transparent material used for the core 3a is higher than the transparent material used for the cladding 3b, both refractive indexes being measured at the infrared wavelength of the light which is intended to be guided by the optical fiber 3. Such wavelength is typically comprised between 750 nm and 1400 nm (near-infrared spectrum), for example 550 nm. This way, an infrared light coupled at one end of the optical fiber 3 is confined within the core 3a by total internal reflection at the interface between core 3a and cladding 3b and then longitudinally propagates along the optical fiber 3.

In an embodiment, the optical fibers 3 are single-mode fibers supporting a single propagation path of the infrared light through the core 3a. In single-mode fibers, the diameter of the core 3a is typically comprised between 8 and 10 microns and the diameter of the cladding 3b is preferably of about 125 microns.

The coating 3c of each optical fiber is preferably made of uncolored, non opaque material, for example an uncolored transparent polymer. For example, the coating 3c may comprise a cured acrylate. The coating 3c protects the optical fiber 3 from the mechanical point of view and may also improve its tensile strength.

The coating 3c can have a thickness of from 25 µm to 65 µm.

In an embodiment, the optical cable 1 may comprise a filler 4 filling the space between the optical fibers 3 and the inner surface of the outer sheath 2 and/or the interstitial spaces between the optical fibers 3. The filler 4 preferably is uncolored and non opaque. The uncolored, non opaque filler 4 preferably is an uncolored, transparent gel. Alternatively, no filler is provided for filling the space between the optical fibers 3, thus making the cable a dry cable.

The filler 4 in the interstitial spaces between the optical fibers 3 may be provided by pre-wetting the outer surface of each optical fiber 3 with a small quantity of uncolored, transparent gel when the outer sheath 2 is extruded.

In an embodiment, the optical fibers 3 are loosely arranged within the outer sheath 2. For example, the optical fibers 3 may be arranged longitudinally and substantially parallel to the cable axis.

The outer surface of the uncolored, non opaque coating 3c of all the optical fibers 3 exhibits, along its length, at least one UV identification marking 3d, namely a marking uniquely identifying the optical fiber 3 within the optical cable 1 and printed in a fluorescent ink, which is transparent, but can be seen under an ultraviolet light.

In an embodiment, one optical fibre 3 of the optical cable 1 has its uncolored, non opaque coating 3c unmarked and bears no UV identification marking 3d.

The UV identification marking can be applied using the same techniques known to the skilled one for ink marking the optical fibres. For example, marks can be printed on the fibre with high speed ink jet (e.g., 1500 m/min) and the marks are dried by radiation, for example by thermal or UV radiation.

In an embodiment, the outer surface of the uncolored, non opaque coating 3c of each optical fiber 3 exhibits several UV identification markings 3d distributed along its length, as schematically depicted in Figure 2. In an embodiment, the identification markings 3d are substantially evenly spaced along the longitudinal direction of the fiber 3, at regular intervals of length L. The length L is preferably comprised between 30 mm and 100 mm.

Each UV identification marking 3d preferably comprises at least one symbol and/or sign uniquely identifying the optical fiber 3 within the optical cable 1.

For example, each UV identification marking 3d may comprise one or more alphanumeric symbols printed in a fluorescent ink, including numbers and/or alphabet letters and/or special characters (such as "$", "&", "-", "§" etc.). In this case, each UV identification marking 3d may be printed on the outer surface of the coating 3c such that its alphanumeric symbols are oriented along the longitudinal axis of the optical fiber 3 or along any direction tilted relative to the longitudinal axis of the optical fiber 3 by any angle equal to or lower than 90°.

In an embodiment, several UV identification markings 3d may be printed at each position along the longitudinal axis of the optical fiber 3, such that their angular positions are substantially evenly distributed about the longitudinal axis of the optical fiber 3. This allows the network operator reading all the alphanumeric symbols of the UV identification marking 3d (when illuminated by a UV light) without the need to twist or rotate the optical fiber 3.

In addition or alternatively to the alphanumeric symbols, each UV identification marking 3d can comprise one or more graphic signs printed in a fluorescent ink. According to advantageous variants, each graphic sign is circumferential, namely - assuming to look at the optical fiber 3 from a fixed point of view and to continuously rotate the optical fiber 3 about its longitudinal axis - its shape and appearance do not change as the optical fiber 3 is rotated. This allows the field operator to easily locate the UV identification marking 2d of the optical fiber 3, without the need to twist or rotate the optical fiber 3.

For example, as depicted in Figure 3, each UV identification marking may comprise one or more rings printed with a fluorescent ink on the outer surface of the uncolored, non opaque coating 3c. The rings are arranged on a plane substantially perpendicular to the longitudinal axis of the optical fiber. This is however not limiting. According to other variants, the rings may lie on a plane tilted relative to the longitudinal axis of the optical fiber by an angle different from 90°.

UV identification markings comprising different signs or symbols may be used to define an identification scheme for optical fibers, which allows to identify different optical fibers within a same optical cable.

For example, as depicted in Figure 3, UV identification markings 3d', 3d" and 3d"' comprising one, two and three rings, respectively, may be used for marking three different optical fibers 3', 3" and 3'" intended to be used in a same optical cable, thereby making them distinguishable from each other. Further optical fibers may be made distinguishable by using UV identification markings with further numbers of rings (e.g. from one to twelve rings).

Hence, assuming that the optical fibres 3', 3" and 3'" are part of a same optical cable, when a field operator has to identify for example the optical fiber 3", she/he illuminates the optical fibers of the cable with the UV light of a UV source. This way, the UV identification markings 3d', 3d" and 3d"' of the optical fibers 3', 3" and 3" become visible to the human eye and allow the field operator to identify the optical fiber 3" as the one whose UV identification markings 3d" comprise two rings.

Alternatively or in addition to the number of rings, the arrangement and/or the width of the rings comprised in a UV identification marking may be used to define an identification scheme for optical fibers.

For instance, an identification scheme may comprise a number of UV identification markings comprising a same number of rings (e.g. four), each optical fiber being uniquely identified by a certain sequence of widths of the rings (e.g. "large - narrow - narrow - narrow", "narrow - large - narrow - narrow", "large - large - narrow - narrow" etc.), as a sort of Morse code. This allows distinguishing the optical fibers, provided that the difference in the widths of the rings may be easily perceived at naked eye by the operator when the UV marking is illuminated by a UV light.

Alternatively or in addition, also the reciprocal distance between rings may be used to provide different UV identification markings.

Therefore, advantageously, when the optical cable 1 is normally illuminated by natural light or artificial light provided by an artificial light source such as an incandescence lamp, a halogen lamp or a white LED, the visual impact of the cable at naked eye is minimum and the cable does not create unpleasant visual effects in the indoor environment where it is installed.

Besides, when a field operator has to identify one or more optical fibres 3 within the cable 1 (for example, the optical fiber(s) 3 that corresponds to a certain end user), she/he illuminates the optical fibers 3 of the cable 1 with the UV light of a UV source, generally after having removed the outer sheath, though the presence of this sheath does not hinder the UV reading. This way, the UV identification markings 3d of the optical fibers 3 become visible to the human eye and allow the field operator to identify the optical fiber(s) of interest. Hence, identifiability of each single optical fibre 3 is advantageously achieved without increasing the visual impact of the optical cable 1.

## Claims

1. An optical cable (1) comprising an uncolored, non opaque outer sheath (2) housing a number n of optical fibres (3) each having a respective uncolored, non opaque coating (3c), wherein at least n-1 optical fibres (3) have the uncolored, non opaque coating (3c) bearing respective ultraviolet identification markings (3d).

2. An optical cable (1) according to claim 1 wherein the number n of optical fibres (3) has the respective uncolored, non opaque coatings (3c) bearing the respective ultraviolet identification markings (3d).

3. An optical cable (1) according to claim 1 wherein the optical fibres (3) are grouped in one or more bundles, each bundle being enclosed by a respective buffer tube, wherein each buffer tube is made of an uncolored, non opaque polymeric material.

4. An optical cable (1) according to claim 1 wherein the uncolored, non opaque outer sheath (2) has an outer diameter lower than 10 mm.

5. An optical cable (1) according to claim 1 wherein the uncolored, non opaque outer sheath (2) has a thickness comprised between 0.1 mm and 0.5 mm.

6. An optical fiber (3) comprising an uncolored, non opaque coating (3c), said uncolored, non opaque coating (3c) bearing an ultraviolet identification marking (3d).
